# EUROPÄISCHE PATENTANMELDUNG

(11) **EP 1 184 950 A1**
(43) Veröffentlichungstag der Anmeldung: **06.03.2002**
(21) Anmeldenummer: 01111035.0
(22) Anmeldetag: 08.05.2001
(51) Int. Cl.: H02B 3/00

(54) **Endoskop für die Verwendung in unter Spannung stehenden Hochspannungsanlagen**

(30) Priorität: 09.05.2000 DE 10022579
(71) Anmelder: Herrenbrück, Gerd, 35781 Weilburg (DE)
(72) Erfinder: Herrenbrück, Gerd, 35781 Weilburg (DE)

(57) **Zusammenfassung**

**2.1** Übliche starre oder flexible Endoskope sind nicht angemessen gegen elektrischen Durchschlag (Isolationsdurchbruch), Überschlag und Überbrückung leitfähiger Teile einer Hochspannungsanlage geschützt. Die Anordnung berücksichtigt die Anforderungen zur Vermeidung vorstehender Ereignisse und sichert somit die Unversehrtheit des Bedieners und der elektrischen Anlage.
**2.2** Zur Bildübertragung werden flexible Bildleiter und optische Komponenten verwendet, die zur Erfüllung der einschlägigen Europäischen Normen in isolierenden Umhüllungen geführt sind oder mittels geeigneter isolierender Befestigung an Arbeitsstangen für das Arbeiten unter Spannung befestigt werden. Am Ende des Rohres oder der Befestigung an der Arbeitsstange befindet sich entweder ein formbarer isolierender Schlauch, der vor dem Einbringen entsprechend der Anlagenkonfiguration gebogen werden muß (siehe Fig. 1) oder zum Beispiel mit Seilzug fernverstellbar ist, oder ein isolierendes Formteil für sich häufig wiederholende Arbeiten.
**2.3** Die Anordnung kann zur Sichtkontrolle und zur Überwachung von Arbeiten unter Spannung in Hochspannungsanlagen eingesetzt werden.

## Beschreibung

Bei der Ausführung von Arbeiten unter Spannung in Hochspannungsanlagen befindet sich der Bediener eines Arbeitsgerätes in einem Mindestabstand zur unter Spannung stehenden Anlage, der in DIN VDE 0105 Teil 100 - Annäherungszone und Gefahrenzone - für jede Spannungsebene festgelegt ist. Bei diesen Arbeiten wird oft erforderlich, von vorne nicht sichtbare Teile auf ihren Zustand zu kontrollieren oder die Teile, an denen gearbeitet wird (ein Beispiel ist das Nachziehen einer Schraube oder einer Mutter) genauer betrachten zu können.

Bekannt sind bisher Lösungen, die mit Spiegeln arbeiten. Dieser Technik sind je nach örtlicher Gegebenheit Grenzen gesetzt.

Die im Patentanspruch 1 angegebene Erfindung wird einerseits der Forderung nach ausreichender Isolierung für den Personen- und Anlagenschutz gerecht und erfüllt die Forderung nach ausreichender Flexibilität, um in den verschiedenen Anlagentypen verwendet werden zu können.

Mit der Erfindung sind folgende Vorteile erreichbar:
- Anpassung an verschiedene Anlagentypen durch Änderung der Geometrie;
- Anpassung an die Aufgabenstellung durch Verwendung mit anderen Geräten für das Arbeiten unter Spannung;
- Anpassung an die Aufgabenstellung (Beobachtung, Überprüfung, Dokumentation) durch variabel einsetzbare Bildaufnehmer;
- Dokumentation von Arbeits- oder Überprüfungsergebnissen für die Instandhaltung.

Ausführungsbeispiele sind in den Zeichnungen dargestellt und werden nachstehend beschrieben:

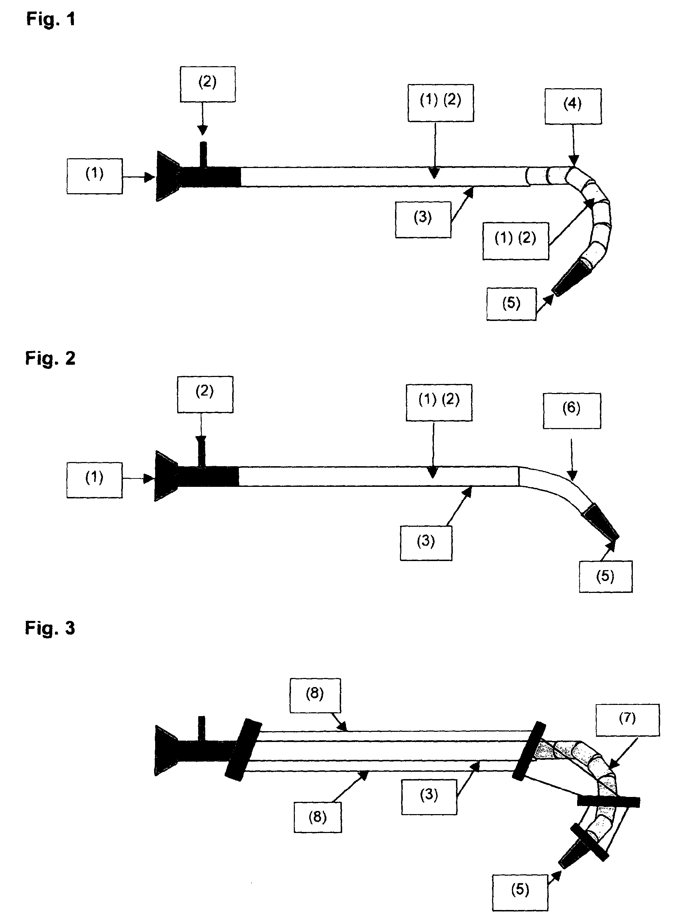

Fig.1 enthält die Darstellung des Gerätes, wie es an Schaltanlagen in offener Bauweise oder an Transformatoren zur Anwendung kommt. Der verformbare Isolierschlauch wird vor dem Einbringen des Gerätes in die Annäherungszone so gebogen, daß der zu betrachtende Gegenstand erreicht werden kann. Steht zum Beispiel ein Transformator an der Gehäusewand einer Kompaktstation und es soll die hintere Seite der nahe an der Wand befindlichen Durchführung betrachtet werden, so ist der Gliederschlauch vor der Annäherung um etwa 180° zu biegen. Auf der Bildauswertungsseite (Okular) kann außer der direkten Betrachtung mit der Wiedergabe über Bildschirm oder zwecks Dokumentation die Kopplung mit einer Kamera gewählt werden.
Fig. 2 enthält die Darstellung mit starrem Formstück. Diese Zusammenstellung kommt für häufig sich wiederholende Arbeiten in Frage.
Fig. 3 zeigt die Möglichkeit der Verformung eines Isolierschlauches nach dem Einbringen in die Anlage mit Seilzug. Auch hier läßt sich der Isolierschlauch um180° biegen.

## Patentansprüche

1. Endoskop, starr oder flexibel, für die Verwendung in Hochspannungsanlagen, die unter Spannung stehen, in isolierender Bauweise mit für die jeweilige Spannungsebene angemessener Isolierung entsprechend den einschlägigen Europäischen Normen und der Möglichkeit zur Anpassung an die örtlichen Gegebenheiten,
**dadurch gekennzeichnet,**
**daß** die für das Einbringen in die Annäherungszone und in die Gefahrenzone der Hochspannungsanlage vorgesehenen Bauteile (1) (2) (3) (4) aus isolierendem Materialien bestehen.

2. Endoskop nach Patentanspruch 1,
**dadurch gekennzeichnet,**
**daß** die für die Bildübertragung (1) verwendeten Bauteile aus isolierenden Materalien bestehen, die den Anforderungen für das Arbeiten unter Spannung entsprechen.

3. Endoskop nach Patentanspruch 2,
**dadurch gekennzeichnet,**
**daß** als Bauteile für die Bildübertragung Bildleiter aus geordneten Lichtwellenleitern (1) verwendet werden, die in isolierenden Umhüllungen (3) (4) angeordnet sind.

4. Endoskop nach Patentanspruch 1,
**dadurch gekennzeichnet,**
**daß** die für die Lichtübertragung zwecks Ausleuchtung des zu betrachtenden Gegenstandes und seiner Umgebung verwendeten Bauteile (2) aus isolierenden Materalien bestehen, die den Anforderungen für das Arbeiten unter Spannung entsprechen.

5. Endoskop nach Patentanspruch 4,
**dadurch gekennzeichnet,**
**daß** als Bauteile für die Lichtübertragung Lichtleiter aus ungeordneten Lichtwellenleitem (2) verwendet werden, die in isolierenden Umhüllungen (3) (4) angeordnet sind.

6. Endoskop nach Patentanspruch 1,
**dadurch gekennzeichnet,**
**daß** in Fortsetzung des Isolierrohres (3) in Richtung Hochspannungsanlage ein selbsttragender isolierender Schlauch (4) angeordnet ist, der die Positionierung des an der Spitze befindlichen Objektivs (5) des Bildleiters und des Lichtleiters auf den zu betrachtenden Anlagenteil vor der Einbringung des Endoskops in die Annäherungszone ermöglicht.

7. Endoskop nach Patentanspruch 1
**dadurch gekennzeichnet,**
**daß** in Fortsetzung des Isolierrohres (3) in Richtung Hochspannungsanlage ein isolierendes Formstück (6) angeordnet ist, durch das die Positionierung des an der Spitze befindlichen Objektivs (5) des Bildleiters auf den zu betrachtenden Anlagenteil vor der Einbringung des Endoskops in die Annäherungszone festgelegt ist.

8. Endoskop nach Patentanspruch 1
**dadurch gekennzeichnet,**
**daß** in Fortsetzung des Isolierrohres (3) in Richtung Hochspannungsanlage ein isolierender Schlauch (7) angeordnet ist, der die Positionierung des Bildleiters auf den zu betrachtenden Anlagenteil nach der Einbringung des Endoskops in die Gefahrenzone durch die Bedienung einer Anordnung aus isolierenden Seilen (8) oder isolierenden Stangen ermöglicht.
